Europäisches Patentamt

European Patent Office

Office européen des brevets

(19)

(11) Veröffentlichungsnummer : **0 254 875 B1**

(12)                  # EUROPÄISCHE PATENTSCHRIFT

(45) Veröffentlichungstag der Patentschrift :
**05.06.91 Patentblatt 91/23**

(51) Int. Cl.$^5$ : **H02M 3/335**

(21) Anmeldenummer : **87109144.3**

(22) Anmeldetag : **25.06.87**

(54) **Schaltungsanordnung zur Stromversorgung elektronischer Geräte.**

(30) Priorität : **10.07.86 DE 3623192**

(43) Veröffentlichungstag der Anmeldung :
**03.02.88 Patentblatt 88/05**

(45) Bekanntmachung des Hinweises auf die
Patenterteilung :
**05.06.91 Patentblatt 91/23**

(84) Benannte Vertragsstaaten :
**DE ES FR GB IT**

(56) Entgegenhaltungen :
**EP-A- 0 177 373**
**WO-A-86/03860**

(56) Entgegenhaltungen :
DE-A- 3 103 489
DE-A- 3 515 611
GB-A- 2 131 238
GB-A- 2 133 909
ELEKTRONIK, Band 24, 1979, Seite 76; R. WIE-
SEMANN: "Universelle Mikroprozessor-Re-
set-Schaltung"

(73) Patentinhaber : **Deutsche Thomson-Brandt
GmbH**
**Hermann-Schwer-Strasse 3 Postfach 1307**
**W-7730 Villingen-Schwenningen (DE)**

(72) Erfinder : **Rilly, Gerard**
**Panoramaweg 6**
**W-7731 Unterkirnach (DE)**

## Beschreibung

Die Erfindung betrifft eine Schaltungsanordnung zur Stromversorgung elektronischer Geräte mit einem sekundär geregelten Schaltnetzteil, das eine oder mehrere Sekundärspannungen erzeugt und einer Anordnung zur Erzeugung eines Reset-Signals zur Initialisierung von in dem elektronischen Gerät befindlichen logischen Schaltungen, in Abhängigkeit eines Spannungssignals.

Bei einem elektronischen Gerät, das in Verbindung mit Mikroprozessoren und anderen logischen Schaltungen zusammenarbeitet, ist es wichtig, daß diese beim Einschalten des Gerätes zur Initialisierung auf einen definierten Anfangszustand gebracht werden. Dies geschieht mit dem sogenannten Reset-Signal, welches zu Beginn an die logischen Schaltungen angelegt wird, welches z.B. Register in einem Mikroprozessor löscht oder Zähler auf den Wert Null setzt. Es ist wichtig, daß das Reset-Signal möglichst dann entsteht, wenn die Versorgungsspannungen des Gerätes auf ihrem Nominalwert liegen. Kommt das Reset-Signal zu früh, können sich bis zum stabilen Aufbau der Versorgungsspannungen undefinierte Anfangszustände der logischen Schaltungen einstellen. Deshalb ist es üblich, eine Schwelle zur Entstehung des Reset-Signals einzuführen, von welcher ab erst ein Reset-Signal gebildet werden kann. In Verbindung mit einem sekundär geregelten Schaltnetzteil ist es bekannt, spezielle von diesen unabhängige Schaltungen zur Erzeugung eines Reset-Signals zu verwenden. Diese Schaltungen benötigen eine Referenzspannung, die unabhängig und verschieden ist von der in dem Schaltnetzteil zur Regelung vorgesehenen Referenzspannung. Sowohl die Abweichungen der unterschiedlichen Referenzspannungen als auch deren unterschiedliche Temperaturabhängigkeit führen zu Schwierigkeiten, wenn ein eindeutiges zeitlich geeignetes Reset-Signal benötigt wird.

Bei Fernsehempfänger ist es bekannt, die für die logischen Schaltungen benötigte niedrige Betriebsspannung von 5 Volt aus einer über einen Serienregler zugeführten höheren Spannung von z.B. 9 Volt zu gewinnen. Der Serienregler verbraucht dabei Leistung und das Reset-Signal wird schon bei Entstehung der Eingangsspannung erzeugt. Diese Lösung ist für die Anwendung auf logische Schaltungen und bei Verwendung eines sekundär geregelten Schaltnetzteils nicht brauchbar.

Eine derartige Schaltung zur überwachung der Stromversorgung eines elektronischen Verbrauchers ist in der Patentanmeldung WO86/03860 beschrieben, die einen Längsregler zur Spannungs-Stabilisierung besitzt. Dieser Längsregler ist mit Verlusten behaftet, weil er Leistung zur Regelung verbraucht. Auch ist der Längsregler nur mit größeren Toleranzen herstellbar und deshalb ungenau. Ein Reset-Signal kann hiermit nicht in einem eng tolerierbaren Spannungsbereich von einigen mV erzeugt werden. Dies ist jedoch wichtig, wenn die Stromversorgung logische Schaltungen versorgen soll.

Der Erfindung liegt die Aufgabe zugrunde, eine Schaltung anzugeben, die das Reset-Signal mit Sicherheit erst dann abgibt, wenn an sämtlichen logischen Schaltungen die stabilen Betriebsspannungen anliegen. Die Erfindung besitzt den Vorteil, daß das Reset-Signal um eine in weiten Grenzen einstellbare Zeit verzögert werden kann und erst entsteht, wenn die Betriebsspannung einen Wert erreicht hat, der nahezu 1% unterhalb ihres Nominalwertes liegt.

Nachstehend wird die Erfindung an einem Ausführungsbeispiel mit Hilfe der Zeichnung erläutert.

Figur 1 zeigt ein Schaltbild zur Erzeugung des Reset-Signals

Figur 2 zeigt den zeitlichen Ablauf von Signalen.

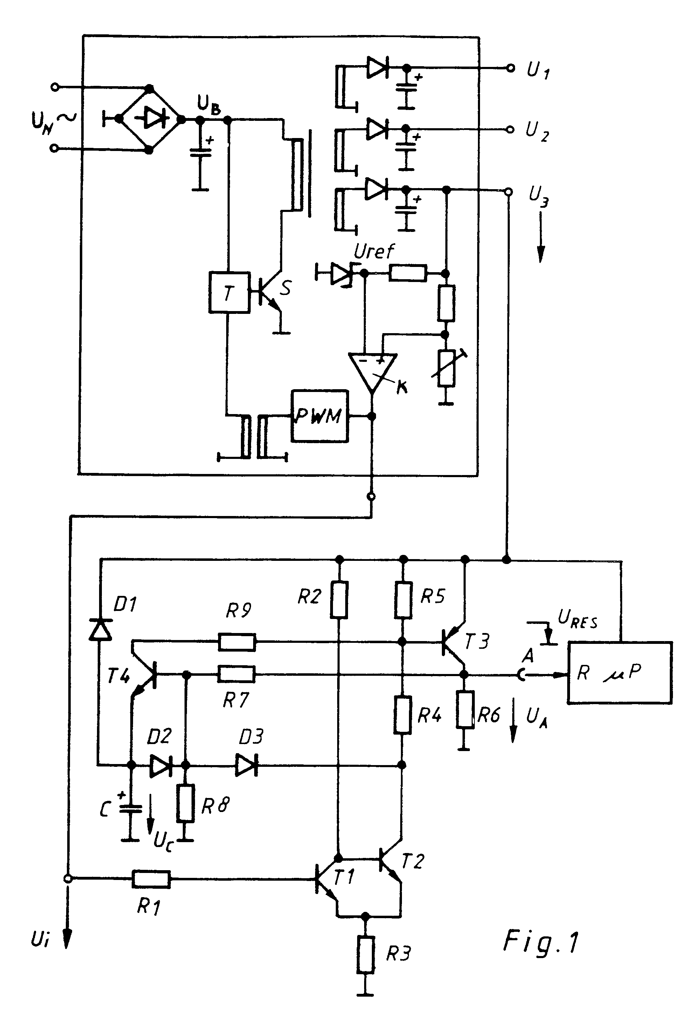

Es handelt sich bei der Darstellung in Figur 1 um ein sekundär geregeltes Schaltnetzteil, wie es z.B. in der Zeitschrift "Elektronik" 1978, Heft 4, Seiten 102-107 beschrieben ist. Aus der gleichgerichteten Netzwechselspannung werden stabile geregelte Sekundärspannungen U1 bis U3 erzeugt, von denen z.B. die Spannung U3 die in einem elektronischen Gerät befindlichen logischen Schaltungen wie z.B. ein Mikroprozessor UP versorgt. Eine Sekundärspannung wird in einem Komparator K mit einer Referenzspannung $U_{ref}$ verglichen. Der Ausgang des Komparators K ist mit einem Pulsbreiten Modulator PWM verbunden, der das Tastverhältnis der Ansteuerimpulse für die Treiberstufe T regelt, die den elektronischen Schalter S des Schaltnetzteils steuert. Zwecks Erzeugung des Reset-Signals $U_{RES}$ wird nun vom Ausgang dieses Komparators K ein Signal über den Widerstand R1 auf die Basis eines ersten Transistors T1 gegeben, dessen Kollektor über einen Widerstand R2 mit der Betriebsspannung U3 und mit der Basis eines zweiten Transistors T2 verbunden ist. Die beiden Transistoren T1 und T2 sind über den gemeinsamen Widerstand R3 mit dem Bezugspotential verbunden. Der Kollektor des Transistors T2 ist über die Reihenschaltung zweier Widerstände R4 und R5 mit der Betriebsspannung U3 verbunden. Der Verbindungspunkt der Widerstände R4 und R5 ist an Basis eines dritten Transistors T3 angeschlossen, dessen Emitter mit der Betriebsspannung U3 verbunden ist und dessen Kollektor am Ausgang A liegt, der über den Widerstand R6 auf Bezugspotential geschaltet ist. Der Ausgang A liegt über einen aus den Widerständen R7 und R8 gebildeten Spannungsteiler auf Bezugspotential. Der Verbindungspunkt der beiden Widerstände ist an die Basis eines vierten Transistors T4 angeschlossen, dessen Kollektor über den Widerstand R9 mit der Basis des Transistors T3 verbunden ist und dessen Emitter einerseits über eine Diode D1 auf die Betriebsspannung U3 und andererseits an einen Kondensator C geschaltet ist, dessen anderes Ende auf dem Bezugspotential liegt. Der Emitter des Transistors T4 ist über die Diode D2 mit dessen Basis verbunden. Eine Diode D3 verbindet die Basis des Transistors T4 mit dem Kollektor des Transistors T2.

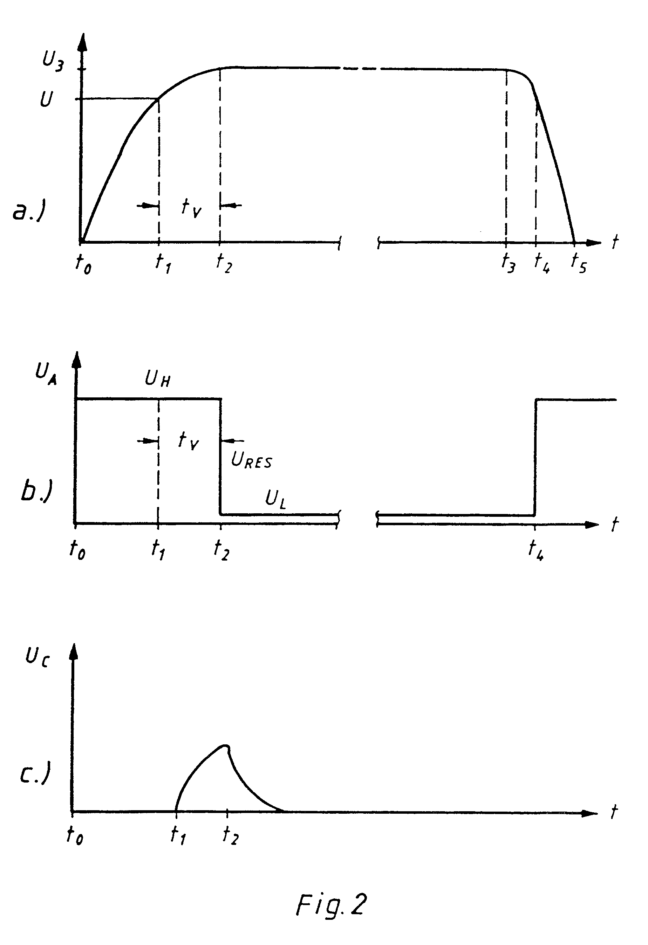

Die Wirkungsweise der Schaltung wird nachstehend mit Hilfe der in Figur 2 gezeigten Diagramme beschrieben.

In Figur 2a ist der Verlauf der Betriebsspannung U3 während des Einschaltens, während des Betriebs und während des Ausschaltens dargestellt. Die Spannung U3 steigt zum Zeitpunkt to beginnend langsam an, bis sie zum Zeitpunkt t1 einen Schwellwert $U_S$ erreicht und zum Zeitpunkt t2 ihren stabilen Betriebswert erreicht. Zum Zeitpunkt t3 des Ausschaltens sinkt die Betriebsspannung langsam ab, bis sie zum Zeitpunkt t4 die Schwelle US unterschreitet und zum Zeitpunkt t5 den Nullwert erreicht.

Solange die Betriebsspannung U3 unterhalb der am Komparator K liegenden Referenzspannung $U_{ref}$ liegt, ist dessen Ausgangsspannung und damit die Eingangsspannung Ui für die Schaltungsanordnung zur Erzeugung des Reset-Signals $U_{RES}$ gleich Null. Somit ist der Transistor T1 gesperrt und der Transistor T2 gesättigt, so daß auch der Transistor T3 gesättigt ist und am Ausgang A die Spannung $U_A$ auf hohem Potential $U_H$ liegt (Figur 2b). Erreicht die Spannung U3 den Schwellwert $U_S$ zum Zeitpunkt t1, geht der Transistor T1 in die Sättigung, der Transistor T2 wird gesperrt. Der Transistor T4, der zuvor durch die leitende Diode D3 gesperrt war, wird nun gesättigt und lädt den Kondensator C auf (Figur 2c). Dieser Aufladevorgang hält den Transistor T3 weiter geöffnet, so daß der Ausgang A noch auf dem Potential $U_H$ gehalten wird. Die durch die Aufladung des Kondensators C erzielte Verzögerungszeit $t_v$ ist durch entsprechende Dimensionierung des Kondensators C je nach Erfordernis zwischen 0,1 msec. bis 20 msec. einstellbar.

Zum Zeitpunkt t2 ist der Ladevorgang beendet, wenn die Betriebsspannung U3 ihren Nominalwert nahezu erreicht. In diesem Moment wird der Transistor T4 gesperrt und auch der Transistor T3 schaltet ab. Dadurch geht der Ausgang A von hohem Potential $U_H$ auf niedriges Potential $U_L$. Der negative Potentialsprung bildet das Reset-Singal $U_{RES}$. Der Kondensator C wird über die Diode D2 und den Widerstand R8 und gegebenenfalls teilweise über die Diode D1 entladen. Dieser Vorgang spielt sich innerhalb einer Sekunde ab. so daß die Schaltung unmittelbar danach wieder in der Lage ist, ein Reset-Signal zu liefern, z.B. wenn die Betriebs spannung gewollt oder ungewollt unterbrochen wird. Zum Zeitpunkt t4 wird beim Ausschalten die Schwelle US unterschritten, ohne jegliche Verzögerung steigt das Potential am Ausgang A auf hohes Potential $U_H$ an.

**Ansprüche**

1. Schaltungsanordnung zur Stromversorgung elektronischer Geräte mit einem sekundär geregelten Schaltnetzteil, das eine oder mehrere Sekundärspannungen erzeugt und einer Anordnung zur Erzeugung eines Reset-Signals zur Initialisierung von in dem elektronischen Geräte befindlichen logischen Schaltungen, in Abhängigkeit eines Spannungssignals, **dadurch gekennzeichnet,** daß das Spannungssignal aus dem Vergleich einer erzeugten gereselten Sekundärspannung ($U_3$) zur Stromversorgung der logischen Schaltungen mit einer Referenzspannung ($U_{ref}$) als Regelspannung für die Einsangsspannung ($U_i$) gewonnen wird und für die Anordnung zur Erzeugung des Reset-Signals dient, wobei dieses durch ein Zeitglied am Ausgang der Anordnung verzögert anliegt, wobei die Zeitverzögerung (tv) derart gewählt ist, daß das Reset-Signal erst anliegt, wenn der Nominalwert der Betriebsspannung ($U_3$) für die logische Schaltung erreicht ist.

**Claims**

1. A circuit arrangement for the current supply of electronic devices, with a secondarily controlled switched power supply which produces one or more secondary voltages, and having an arrangement for producing a reset signal for initialising logic circuits located in the electronic device, depending on a voltage signal, characterised in that the voltage signal is obtained from the comparison of a produced controlled secondary voltage ($U_3$), for the current supply of the logic circuits, with a reference voltage ($U_{ref}$), as the regulating voltage for the input voltage ($U_i$), and serves for the arrangement for producing the reset signal, in which this signal is applied, delayed by a time element, to the output of the arrangement, the time delay (tv) being selected such that the reset signal is only applied when the nominal value of the operating voltage ($U_3$) for the logic circuit is achieved.

**Revendications**

1. Montage pour l'alimentation de courant d'appareils électronique comprenant un bloc d'alimentation secondaire régulé qui génère une ou plusieurs tensions secondaires, et un circuit pour produire en fonction d'un signal de tension un signal "reset" destiné à initialiser des circuits logiques logés dans les appareils électroniques, en fonction d'un signal de tension, caractérisé en ce que le signal de tension est obtenu à partir de la comparaison d'une tension secondaire régulée ($U_3$) générée pour l'alimentation de courant des circuits logiques avec une tension de référence ($U_{ref}$) servant de tension de régulation pour la tension d'entrée (U1) et sert au circuit destiné à générer le signal "reset" qui est appliqué en retard à l'entrée du circuit par un relais de temporisation, la temporisation (tv) étant choisie de telle sorte que le signal "reset" est appliqué seulement lorsque la tension de service (U3) atteint la valeur nominale pour le circuit logique.

Fig.1

Fig. 2